# EUROPEAN PATENT SPECIFICATION

(11) **EP 3 335 108 B1**
(45) Date of publication and mention of the grant of the patent: **18.12.2019**
(21) Application number: 16742126.2
(22) Date of filing: 11.07.2016
(51) Int. Cl.: G06F 9/30

(54) **TABLE LOOKUP USING SIMD INSTRUCTIONS**
TABELLENNACHSCHLAG UNTER VERWENDUNG VON SIMD-ANWEISUNGEN
CONSULTATION DE TABLE À L'AIDE D'INSTRUCTIONS UNIQUES APPLIQUÉES À DES DONNÉES MULTIPLES

(30) Priority: 14.08.2015 US 201514826199
(43) Date of publication of application: 20.06.2018
(73) Proprietor: Qualcomm Incorporated, San Diego, CA 92121-1714 (US)
(72) Inventor: MAHURIN, Eric Wayne, San Diego, CA 92121-1714 (US); CODRESCU, Lucian, San Diego, CA 92121-1714 (US); PLONDKE, Erich James, San Diego, CA 92121-1714 (US); HOYLE, David, San Diego, CA 92121-1714 (US); ZENG, Mao, San Diego, CA 92121-1714 (US); GAN, Kim-Chyan, San Diego, CA 92121-1714 (US)
(74) Representative: Tomkins & Co
(86) International application number: PCT/US2016/041698
(87) International publication number: WO 2017/030675

(56) References cited:
- GB-A- 2 409 062
- US-A1- 2004 054 879
- US-A1- 2013 185 538

## Description

### Field of Disclosure

Disclosed aspects pertain to table lookup operations using single instruction multiple data (SIMD) instructions. More specifically, exemplary aspects relate to SIMD instructions which specify subsets of indices for looking up subsets of table entries.

### Background

Single instruction multiple data (SIMD) instructions may be used in processing systems for exploiting data parallelism. Data parallelism exists when a same or common task needs to be performed on two or more data elements of a data vector, for example. Rather than use multiple instructions, the common task may be performed on the two or more of the data elements in parallel by using a single SIMD instruction which defines the common task to be performed on multiple data elements.

Some processing systems may support SIMD table lookup operations wherein a SIMD instruction may comprise two or more indices corresponding to two or more entries of a table that needs to be looked up. However, the order in which the indices are specified in the SIMD instruction need not correspond to the order in which the table entries are arranged in a memory or storage location. For example, if a first index value corresponds to a first table entry, the first index value may appear in second position or second SIMD lane in the SIMD instruction.

In order to map the indices to table entries in a SIMD table lookup operation, conventional processing systems may include a crossbar. A crossbar may be implemented using switches or multiplexors. For example, in order to lookup N table entries using N indices, an NxN crossbar may be implemented using N N-input multiplexors. Each N-input multiplexor may accept all N table entries as inputs and select one of the N table entries as an output, based on a particular one of the N index values. While a crossbar implementation achieves the desired functionality, it incurs significant hardware costs for implementing the N N-input multiplexors. Moreover, the crossbar implementations are not easily scalable as the size of (e.g. the number of data elements in) data vectors to be operated on increases.

Another conventional approach involves storing the table comprising the multiple table entries in a memory system. The SIMD instruction may specify the memory addresses rather than the indices for each table entry. In some implementations, offset values may be specified rather than full memory addresses by assuming a common base address for all the table entries. In either case, the SIMD instruction may be implemented as a set of load instructions which gather the table entries from the memory locations using the memory addresses or offsets. However, implementing a set of parallel load operations for each SIMD table lookup instruction is a complex and expensive operation which cannot scale to larger vector lengths or number of table entries.

Accordingly, there is a need in the art for efficient and highly scalable implementations of SIMD table lookup operations.

### SUMMARY

Exemplary aspects are directed to systems and methods for looking up entries of a table. A processor receives one or more single instruction multiple data (SIMD) instructions, including a first SIMD instruction which specifies a first subset of indices. A first subset of table entries is looked up, using a crossbar, with the first subset of indices. A first vector output of the first SIMD instruction is based on whether the outputs of the crossbar belong to a desired subset of table entries. Similarly, second, third, and fourth SIMD instructions specify corresponding second, third, and fourth subsets of indices to lookup the remaining table entries using the crossbar. The size of the crossbar is based on the number of indices in the subset of indices used to lookup table entries.

For example, an exemplary aspect pertains to method of looking up entries of a table stored in a memory, by a processor. The method comprises receiving a first single instruction multiple data (SIMD) instruction specifying a first subset of indices, looking up, in a crossbar implemented by the processor, a first subset of table entries with the first subset of indices, and generating a first vector output of the first SIMD instruction based on the outputs of the crossbar.

Another exemplary aspect includes an apparatus comprising a memory comprising a table and a processor configured to execute a first single instruction multiple data (SIMD) instruction. The processor comprises a crossbar configured to lookup a first subset of table entries of the table, with a first subset of indices specified by the first SIMD instruction, and logic to generate a first vector output of the first SIMD instruction based on outputs of the crossbar.

Another exemplary aspect relates to system comprising system comprising means for storing a table, means for receiving a first single instruction multiple data (SIMD) instruction specifying a first subset of indices, means for looking up a first subset of table entries with the first subset of indices to generate looked up table entries, and means for generating a first vector output of the first SIMD instruction based on the looked up table entries.

Yet another exemplary aspect is directed to a non-transitory computer-readable storage medium comprising instructions executable by a processor, which when executed by the processor cause the processor to perform operations for looking up entries of a table, the non-transitory computer-readable storage medium comprising code for receiving a first single instruction multiple data (SIMD) instruction specifying a first subset of indices, code for looking up, in a crossbar, a first subset of table entries with the first subset of indices, and code for generating a first vector output of the first SIMD instruction based on the outputs of the crossbar.

GB2409062 (A) discloses a register data store provided within a data processing system. The register data store may be accessed via registers for which a data processing instruction specifies a register size Q, D and a data element size S16, S8 for the multiple SIMD data elements to be manipulated by that data processing instruction. A given data processing element may be accessed via different registers depending upon the mapping between the register specifier, the register size and the data element size to a particular location within the register data store.

### BRIEF DESCRIPTION OF THE DRAWINGS

The accompanying drawings are presented to aid in the description of aspects of the invention and are provided solely for illustration of the aspects and not limitation thereof.
FIG. 1 illustrates a processing system for performing a table lookup using SIMD instructions according to exemplary aspects.
FIG. 2 illustrates an exemplary crossbar structure.
FIG. 3 illustrates a method of performing table lookups using SIMD instructions.
FIG. 4 illustrates an exemplary processing device 400 in which an aspect of the disclosure may be advantageously employed.

### DETAILED DESCRIPTION

Aspects of the invention are disclosed in the following description and related drawings directed to specific aspects of the invention. Alternative aspects may be devised without departing from the scope of the invention. Additionally, well-known elements of the invention will not be described in detail or will be omitted so as not to obscure the relevant details of the invention.

The word "exemplary" is used herein to mean "serving as an example, instance, or illustration." Any aspect described herein as "exemplary" is not necessarily to be construed as preferred or advantageous over other aspects. Likewise, the term "aspects of the invention" does not require that all aspects of the invention include the discussed feature, advantage or mode of operation.

The terminology used herein is for the purpose of describing particular aspects only and is not intended to be limiting of aspects of the invention. As used herein, the singular forms "a", "an" and "the" are intended to include the plural forms as well, unless the context clearly indicates otherwise. It will be further understood that the terms "comprises", "comprising,", "includes" and/or "including", when used herein, specify the presence of stated features, integers, steps, operations, elements, and/or components, but do not preclude the presence or addition of one or more other features, integers, steps, operations, elements, components, and/or groups thereof.

Further, many aspects are described in terms of sequences of actions to be performed by, for example, elements of a computing device. It will be recognized that various actions described herein can be performed by specific circuits (e.g., application specific integrated circuits (ASICs)), by program instructions being executed by one or more processors, or by a combination of both. Additionally, these sequence of actions described herein can be considered to be embodied entirely within any form of computer readable storage medium having stored therein a corresponding set of computer instructions that upon execution would cause an associated processor to perform the functionality described herein. Thus, the various aspects of the invention may be embodied in a number of different forms, all of which have been contemplated to be within the scope of the claimed subject matter. In addition, for each of the aspects described herein, the corresponding form of any such aspects may be described herein as, for example, "logic configured to" perform the described action.

Exemplary aspects of this disclosure are directed to SIMD instructions for table lookups which reduce the complexity of a full table lookup using conventional crossbar implementations. In one aspect, exemplary SIMD instructions may be directed to partial table lookups which reduce lookup time and crossbar complexity. For example, rather than perform a full table lookup of a table comprising N table entries using a single SIMD instruction, a partial table lookup of a first subset of the N table entries may be performed using one or more SIMD instructions (e.g., different SIMD instructions for lookup of even-numbered entries and lookup of odd-numbered entries of the first subset of N table entries). Similarly, one or more SIMD instructions (e.g., different SIMD instructions for lookup of even-numbered entries and lookup of odd-numbered entries) can be used to perform partial table lookups of other subsets, such as a second subset of the N table entries. The different subsets, such as the first and second subsets do not overlap (e.g., the first subset may pertain to a lower half and the second subset may pertain to an upper half of the N table entries).

In some aspects, the SIMD instructions used to lookup the various subsets may simply specify even-numbered indices or odd-numbered indices, for example, and the table lookup operation may be implemented depending on the subset of table entries to which the SIMD instructions pertain. Thus, a first SIMD instruction may specify even-numbered indices corresponding to a lower half of table entries, while a second SIMD instruction may specify odd-numbered indices corresponding to the lower half of the table entries. A third SIMD instruction may specify even-numbered indices corresponding to an upper half of table entries, and a fourth SIMD instruction may specify odd-numbered indices corresponding to the upper half of the table entries. Crossbars implemented using Benes or Clos networks as known in the art, can be implemented with less stages or complexity for breaking down the table lookup into such non-contiguous table lookup operations (e.g., even-numbered or odd-numbered indices) than for implementing full table lookups in a conventional manner.

In one aspect, each index may be a multi-bit value, such that a portion of each index can be used to confirm that the lookup operation pertains to the correct or desired subset of the table entries. For example, the first SIMD instruction may include a first subset of M indices corresponding to M table entries of the first subset. Comparison logic may be utilized to ascertain that the M indices map to M table entries of the expected or desired first subset. One or more most significant bits (MSBs) of the M indices can be checked to ensure that they correspond to M table entries of the first subset. The remaining bits of the M indices may be used to lookup M table entries within the first subset, for example, by using a MxM crossbar, which would be smaller than an NxN crossbar which can be implemented to perform the full table lookup in a conventional manner.

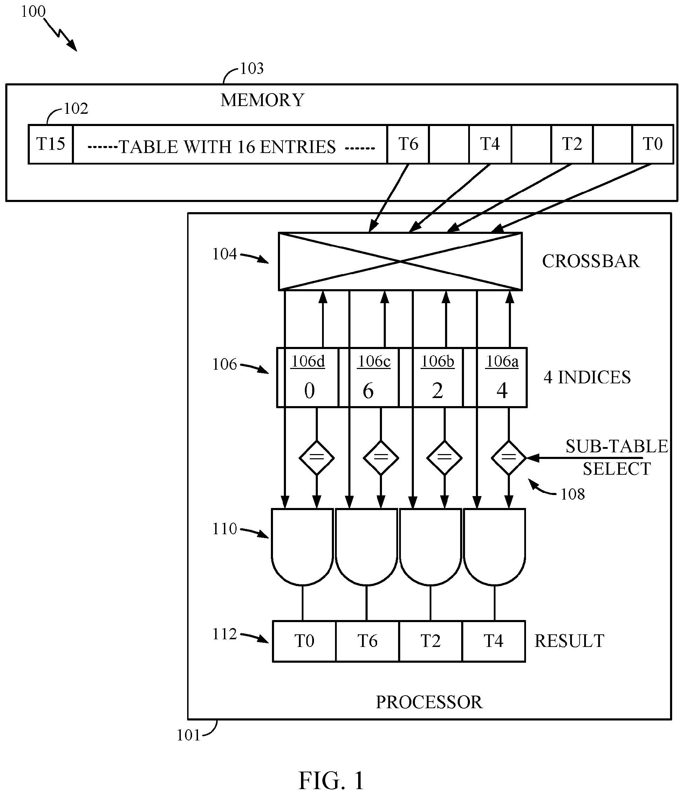

With reference now to FIG. 1, an apparatus or processing system 100 according to exemplary aspects is illustrated. Processing system 100 comprises memory 103 and processor 101. Although memory 103 is shown to be different from processor 101, this is merely for the sake of illustration, and in some aspects, memory 103 may be a part of processor 101 (e.g., memory 103 may be a set of registers or other means for storing a table, included in processor 101). Processor 101 can include logic to execute SIMD instructions to perform table lookups according to exemplary aspects.

In the illustrated example, memory 103 is shown to include table 102. Table 102 comprises 16 table entries, TO-T15 (not all of which have been explicitly shown). SIMD instructions may be used to lookup two or more of the 16 table entries TO-T15 in parallel using 16 corresponding indices, 0-15. Rather than use a single SIMD instruction (e.g., specifying 16 indices) for the lookup of all 16 instructions (e.g., with a 16x16 crossbar), multiple SIMD instructions can be used to perform partial lookups of table 102 with smaller crossbars (e.g., 4x4 crossbars) such as crossbar 104, in exemplary aspects.

In further detail, SIMD instruction 106 shown in FIG. 1, is one of four possible SIMD instructions which may be received by processor 101 (e.g., from an instruction cache, not shown). A combination of the four SIMD instructions can be used to lookup all 16 table entries of table 102. SIMD instruction 106 includes a first subset of the indices 0-15. More specifically, SIMD instruction 106 specifies four lanes, 106a-d (from right to left), which each include one index value. Three more SIMD instructions similar to SIMD instruction 106 may specify other subsets of indices to the remaining entries of table 102. Table lookup using the four SIMD instructions may be performed in one or more cycles, and may be implemented as a loop. More such SIMD instructions may be used to lookup table sizes bigger than table 102. Thus, the exemplary implementations are scalable.

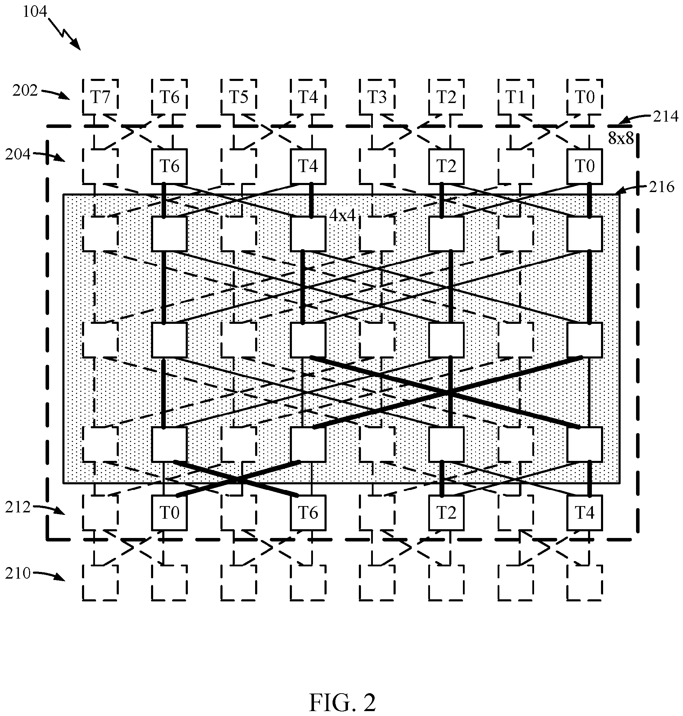

As previously noted, in one aspect, SIMD instruction 106 may specify a first subset of indices, where the first subset of indices may be non-contiguous indices. As illustrated, lane 106a of instruction 106 specifies index 4, lane 106b specifies index 2, lane 106c specifies index 6, and lane 106d specifies index 0. All four indices specified in SIMD instruction 106 are non-contiguous, and moreover, they correspond to a specific subset of table entries, i.e., the lower half (T0-T7) of table entries TO-T15. Crossbar 104 (which will be explained further with reference to FIG. 2) may be used to lookup the table entries T4, T2, T6, and T0 corresponding to indices 4, 2, 6, 0 in lanes 106a-106d respectively (from right to left). In exemplary aspects, it is verified whether the outputs of crossbar 104, which represent the entries of table 102 which are looked up with the subset of indices provided by a corresponding SIMD instruction, belong to the correct or desired subset of table entries (e.g., i.e., the lower half (T0-T7) or upper half (T8-T15) of table entries T0-T15). If the outputs of crossbar 104 to belong to the desired subset, then a corresponding output vector, shown as result 112, is generated as being equal to the outputs of crossbar 104; otherwise, the output vector or result 112 is generated as equal to zero values. Accordingly, processor 101 includes logic, such as AND gates 110, to generate result 112 based on outputs of crossbar 104, as follows. Result 112 can be, for example, a register (e.g., part of a register file, not shown, of processor 101) used for storing results of instructions executed by processor 101.

In an aspect, if SIMD instruction 106 is considered to be the first of the four SIMD instructions which can be used to lookup all 16 indices of table 102, then the first SIMD instruction includes a first subset of indices (i.e., even-numbered indices) for looking up table entries of the first subset of table entries (i.e., lower half (T0-T7) of table entries TO-T15). A second SIMD instruction can include a second subset of indices (i.e., odd-numbered indices) for looking up table entries of the first subset of table entries. Third and fourth SIMD instructions can similarly include third and fourth subsets of indices (i.e., even-numbered and odd-numbered indices, respectively) for looking up a second subset of table entries (i.e., upper half (T8-T15) of table entries T0-T15).

In order to ensure that the correct or desired subset of table entries (e.g., lower half T0-T7 in the case of the first SIMD instruction 106) are looked up, comparators 108 are used to check if the subset of indices fall within a range corresponding to the desired subset. In an example, if 4-bits, [3:0] be used to represent indices 0-15 in binary notation. The most significant bit or bit [3] of the 4-bit index is "1" for the second subset or upper half T8-T15 of the table entries and "0" for the first subset or lower half T0-T7 of the table entries. Thus, comparators 108 may be configured to compare bit [3] of each of the subset of indices in lanes 106a-106d with a sub-table select value of "0" to ensure that SIMD instruction 106 specifies the correct subset of indices for a particular operation. The sub-table select value may be supplied by an operand of SIMD instruction 106 or by a programmer or compiler. If comparators 108 reveal that the subset of indices correspond to the desired subset of table entries (as in the illustrated example), comparators 108 output values of "1" which are input to AND gates 110. AND gates 110 also receive the outputs of crossbar 104 as another input and pass on them on to result 112 if the outputs of crossbar 104 are verified to belong to the desired subset of table entries. Result 112 is an output vector of SIMD instruction 106 comprising the table entries T4, T2, T6, and T0 of the first subset of table entries, corresponding to the subset of indices 4, 2, 6, and 0 respectively. In other words, AND gates 110 generate result 112 as equal to the outputs of crossbar 104, if the outputs of crossbar 104 belong to the correct or desired subset of table entries.

If, on the other hand, comparators 108 reveal that the subset of indices do not correspond to the desired subset of table entries (e.g., the sub-table select value is "1," corresponding to the upper half of the table entries T8-T15), then the outputs of AND gates 110 would have all been "0," causing zero values to be written to result 112. In other words, AND gates 110 generate result 112 as equal to zero values, if the outputs of crossbar 104 do not belong to the correct or desired subset of table entries. In cases where a full table lookup is performed in multiple cycles or by the use of multiple instructions (e.g., the first to fourth SIMD instructions discussed above), this feature of writing a result "0" may be employed in order to zero out contributions from subsets of table entries which are not the focus of a specific instruction for partial table lookup. Moreover, skilled persons will understand that any number of bits may be used for the sub-table select. For example, if table 102 were part of a larger, say 32-entry table, the indices may be 5 or more bits wide and bits [5:4] may be used to focus the lookup on the first subset table entries T0-T7 of the full table T0-T31.

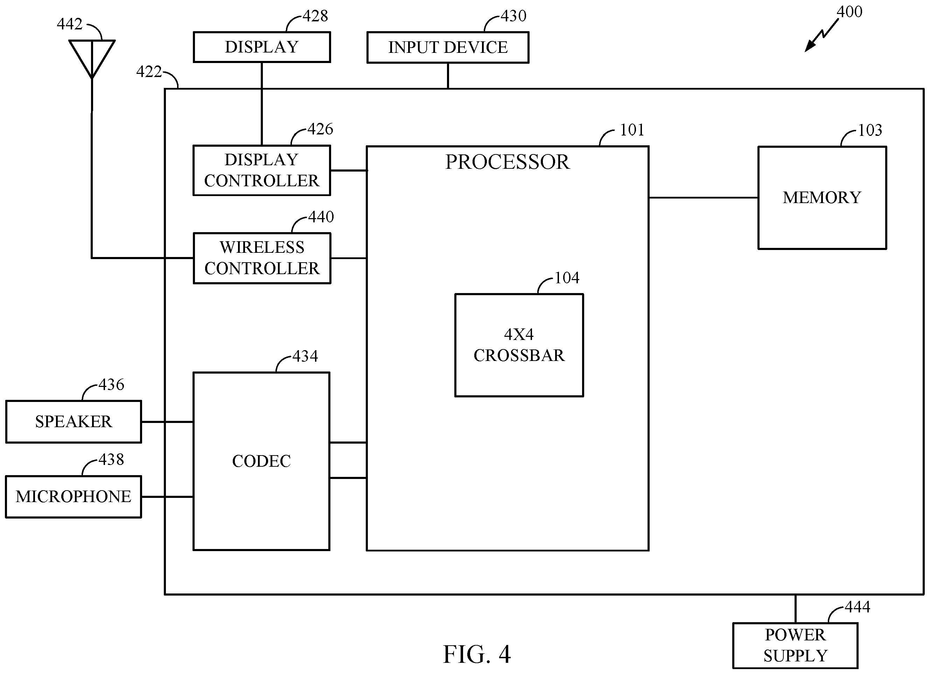

With reference now to FIG. 2, an expanded view of crossbar 104 is shown. As previously noted, crossbars for table lookups may be implemented based on Benes networks or Clos networks as known in the art. In FIG. 2, 4x4 crossbar 216 corresponds to logic which may be actually implemented in crossbar 104. FIG. 2 also shows 8x8 crossbar 214 in dashed lines, as well as rows 202 and 210 in dashed lines. As will be further explained below, dashed lines in FIG. 2 correspond to features which are not actually implemented in crossbar 104, but are shown to illustrate the hardware savings in the exemplary implementation of crossbar 104.

In more detail, if crossbar 104 had been used for a table lookup of the entire first subset or lower half of table entries T0-T7 using a SIMD instruction comprising eight indices, then 8x8 crossbar 214 may have been implemented to lookup all eight of the first subset of table entries at row 202 using all eight corresponding indices to generate output row 210 comprising the looked up table entries of row 202. Accordingly, row 202 is shown to comprise all eight table entries T0-T7 as potential table entries which may be input to 8x8 crossbar 214. However, 8x8 crossbar 214 with eight table entries T0-T7 at row 202 to generate eight outputs (looked up table entries) at row 210 can be avoided. Therefore, the input row 202, output 210, as well as switches (shown as boxes, which may be implemented, for example, using multiplexors or similar logic for transferring or moving data in crossbars, as known in the art) and related connections of 8x8 crossbar 214 which can be avoided are shown in dashed lines. Instead, 4x4 crossbar 216 described below can be actually implemented in crossbar 104, and therefore, corresponding inputs, outputs, transfer elements, and related connections of 4x4 crossbar 216 are shown in solid lines in FIG. 2.

As previously explained, since exemplary SIMD instruction 106 specifies only even-numbered indices, only even-numbered table entries of the first subset of table entries (i.e., T0, T2, T4, and T6) corresponding to the even-numbered indices need to be looked up. Thus, only the even-numbered table entries of the first subset of table entries (i.e., T0, T2, T4, and T6) are input to 4x4 crossbar 216 at row 204, and shown in corresponding boxes with solid lines. Correspondingly, the even-numbered table entries of row 204 can be looked up with only the even-numbered indices, and so, logic for looking up remaining table entries, can be avoided (shown in dashed lines, as noted above). The switches (boxes) and related connections in 4x4 crossbar 216 which are used for looking up table entries of row 204 with only four even-numbered indices, are shown in solid lines, with output row 212 comprising looked up table entries using the indices 4, 2, 6, and 0 in lanes 106a-d, respectively, of SIMD instruction 106 (see FIG. 1). Specifically, bold lines are used to highlight example paths followed from table entries T0, T2, T4, and T6 in input row 204 across three stages of switches to generate looked up table entries T4, T2, T6, T0 (from right to left) in output row 212. A further detailed description of the switches or connections involved in the paths from input row 202 to output row 212 is avoided in this disclosure, as these details will be understood by one skilled in the art. As such, with combined reference to FIGS. 1-2, looked up table entries of output row 212 can be provided to result 112 based on comparators 108 and AND gates 110.

Accordingly, crossbar 104 may implement the logic shown in solid lines in 4x4 crossbar 216 to perform the lookup operation for SIMD instruction 106. As can be appreciated, 4x4 crossbar 216 is a simplified crossbar network with fewer stages and switches in comparison to 8x8 crossbar 214. In general, the size of the crossbar used in exemplary table lookups can be based on the number of indices specified by a corresponding SIMD instruction (e.g., a 4x4 crossbar for looking up table 102 using 4 indices specified in the first SIMD instruction 106). Correspondingly, hardware costs are reduced in implementations of exemplary partial table look-up operations (e.g., of non-contiguous table entries).

With continuing reference to FIG. 2, a lookup operation for the aforementioned second SIMD instruction can involve a second subset of indices (e.g., odd-numbered indices) for looking up odd-numbered table entries of the first subset of table entries (i.e., table entries T1, T3, T5, and T7 of the first subset T0-T7 of table entries T0-T15). Thus, the odd-numbered table entries T1, T3, T5, and T7 may be provided in row 204, in place of the even-numbered table entries T0, T2, T4, T6 shown in FIG. 2, respectively. Similar to the discussion of looking up even-numbered table entries T0, T2, T4, T6 for the first SIMD instruction 106 above, 4x4 crossbar 216 can be implemented to lookup the table entries T1, T3, T5, and T7 using the odd-numbered indices specified in the second SIMD instruction. Once again, only the switches and respective shown in solid lines in 4x4 crossbar 216 may be utilized to implement various paths across the stages of 4x4 crossbar 216 based on the specific odd-numbered indices specified in the second SIMD instruction. Further details of looking up the table entries for the second SIMD instruction will be avoided as they are similar to the detailed description provided above for the first SIMD instruction.

Similarly, a third subset of indices and a fourth subset of indices (e.g., even-numbered indices 8, 10, 12, 14 and odd-numbered indices 9, 11, 13, 15) may be used for looking up table entries of the second subset of table entries (e.g., T8, T10, T12, T14, and T9, T11, T13, T15, respectively, of the second subset T8-T15 of table entries TO-T15) provided in row 204 using 4x4 crossbar 216, for corresponding implementations of the third and fourth SIMD instructions.

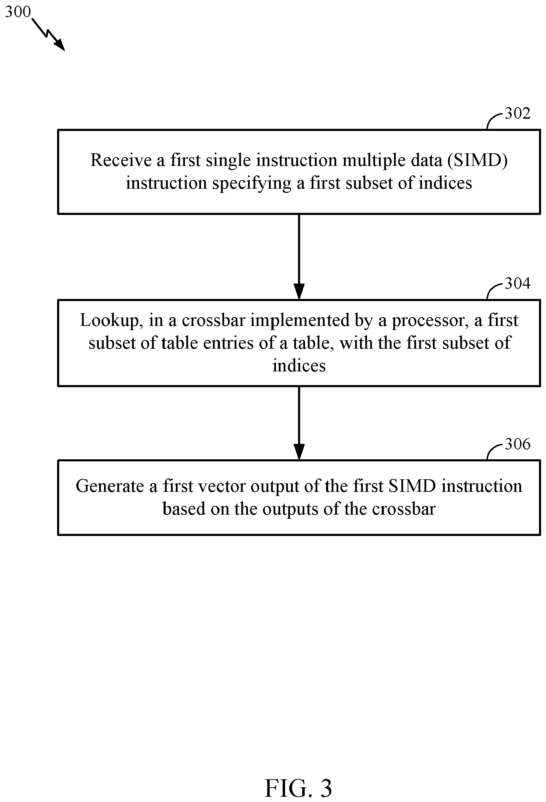

Accordingly, it will be appreciated that aspects include various methods for performing the processes, functions and/or algorithms disclosed herein. For example, as illustrated in FIG. 3, an aspect can include method 300 for looking up entries of a table (e.g., table 102 comprising entries TO-T15) stored in a memory (e.g., memory 103), by a processor (e.g., processor 101).

In further detail, Block 302 of method 300 includes receiving a first single instruction multiple data (SIMD) instruction specifying a first subset of indices. For example, Block 302 can include receiving SIMD instruction 106 from an instruction cache, SIMD instruction 106 comprising a first subset of indices (e.g., lower half T0-T7), wherein the first subset of indices are non-contiguous, for example, are even-numbered indices (e.g., indices 0, 2, 4, 6).

Block 304 includes looking up, in a crossbar implemented by the processor, a first subset of table entries with the first subset of indices. For example, Block 304 can pertain to looking up table entries of the lower half of table 102 using the first subset of indices specified by SIMD instruction 106, using 4x4 crossbar 216 of crossbar 104. The size of the crossbar can based on a number of indices in the first subset of indices (e.g., a 4x4 crossbar based on 4 indices in the first subset of indices).

Block 306 includes generating a first vector output (e.g., result 112) of the first SIMD instruction based on the outputs of the crossbar. For example, Block 306 may include generating the first vector output as equal to output row 212 of 4x4 crossbar 216, if output row 212 of 4x4 crossbar 216 belongs to a desired subset of table entries (e.g., using AND gates 110 and sub-table select 108, as described above). Otherwise, if output row 212 of 4x4 crossbar 216 does not belong to a desired subset of table entries Block 306 may include generating the first vector output as equal to zero values.

In further aspects, method 300 can include receiving a second SIMD instruction specifying a second subset of indices (e.g., odd-numbered indices 1, 3, 5, 7), and looking up, in the crossbar, the first subset of table entries with the second subset of indices, where the first subset of indices and the second subset of indices are non-overlapping. Additionally, method 300 can also include receiving a third SIMD instruction specifying a third subset of indices (e.g., even-numbered indices 8, 10, 12, 14), and looking up, in the crossbar, a second subset of table entries (e.g., upper half T8-T15), wherein the first subset of table entries (e.g., lower half T0-T7) and the second subset of table entries are non-overlapping. Similarly, method 300 can further include receiving a fourth SIMD instruction specifying a fourth subset of indices (e.g., odd-numbered indices 9, 11, 13, and 15), and looking up, in the crossbar, the second subset of table entries, where the third subset of indices and the fourth subset of indices are non-overlapping.

Moreover, it will also be understood that exemplary aspects include various means for performing the functions described herein. For example, from the above description it is seen that processing system 100 can comprise means for performing the functions of exemplary aspects. In one example, processing system 100 can include means (e.g., memory 103) for storing a table (e.g., table 102). Processing system 100 can also include means (e.g., processor 101) for receiving a first single instruction multiple data (SIMD) instruction (e.g., SIMD instruction 106) specifying a first subset of indices (e.g., indices 0, 2, 4, 6). Processing system 100 can include means for looking up a first subset of table entries with the first subset of indices (e.g., crossbar 104) and means (e.g., AND gates 110, result 112) for generating a first vector output of the first SIMD instruction based on the outputs of the crossbar.

Referring to FIG. 4, a block diagram of a particular illustrative aspect of processing device 400 configured according to exemplary aspects. For example, processing device 400 may be configured to perform method 300 of FIG. 3. Processing device 400 includes processor 101 (where only 4x4 crossbar 104 shown, but the remaining details of processor 101 shown in FIG. 1 have been omitted from FIG. 4, for the sake of clarity). As shown in FIG. 4, processor 101 may be in communication with memory 103 (which can include table 102, not shown in this view, for the sake of clarity).

FIG. 4 also shows display controller 426 that is coupled to processor 101 and to display 428. Coder/decoder (CODEC) 434 (e.g., an audio and/or voice CODEC) can be coupled to processor 101. Other components, such as wireless controller 440 (which may include a modem) are also illustrated. Speaker 436 and microphone 438 can be coupled to CODEC 434. FIG. 4 also indicates that wireless controller 440 can be coupled to wireless antenna 442. In a particular aspect, processor 101, display controller 426, memory 103, CODEC 434, and wireless controller 440 are included in a system-in-package or system-on-chip device 422.

In a particular aspect, input device 430 and power supply 444 are coupled to the system-on-chip device 422. Moreover, in a particular aspect, as illustrated in FIG. 4, display 428, input device 430, speaker 436, microphone 438, wireless antenna 442, and power supply 444 are external to the system-on-chip device 422. However, each of display 428, input device 430, speaker 436, microphone 438, wireless antenna 442, and power supply 444 can be coupled to a component of the system-on-chip device 422, such as an interface or a controller.

It should be noted that although FIG. 4 depicts a wireless communications device, processor 101 and memory 103 may also be integrated into a set-top box, a music player, a video player, an entertainment unit, a navigation device, a personal digital assistant (PDA), a fixed location data unit, or a computer. Further, at least one or more exemplary aspects of processing device 400 may be integrated in at least one semiconductor die.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The methods, sequences and/or algorithms described in connection with the aspects disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor.

Accordingly, an aspect of the invention can include a computer-readable media embodying a method for performing operations for looking up entries of a table using SIMD instructions. Accordingly, the invention is not limited to illustrated examples and any means for performing the functionality described herein are included in aspects of the invention.

While the foregoing disclosure shows illustrative aspects of the invention, it should be noted that various changes and modifications could be made herein without departing from the scope of the invention as defined by the appended claims. The functions, steps and/or actions of the method claims in accordance with the aspects of the invention described herein need not be performed in any particular order. Furthermore, although elements of the invention may be described or claimed in the singular, the plural is contemplated unless limitation to the singular is explicitly stated.

## Claims

1. A method of looking up entries of a table (102) stored in a memory (103), by a processor (101), the method comprising:
receiving (302) a first single instruction multiple data, SIMD, instruction specifying a first subset of indices;
looking up (304), in a crossbar (104) implemented by the processor (101), a first subset of table entries corresponding to the first subset of indices;
checking whether the outputs of the crossbar belong to a desired subset of table entries by comparing one or more most significant bits of each index of the first subset of indices with a sub-table select value;
generating a first vector output of the first SIMD instruction as equal to the outputs of the crossbar (104), if the outputs of the crossbar (104) belong to a desired subset of table entries; and
generating the first vector output as equal to zero values, if the outputs of the crossbar (104) do not belong to a desired subset of table entries.

2. The method of claim 1, wherein the first subset of indices are non-contiguous.

3. The method of claim 1 further comprising receiving a second SIMD instruction specifying a second subset of indices, and looking up, in the crossbar (104), the first subset of table entries with the second subset of indices.

4. The method of claim 3, wherein the first subset of indices and the second subset of indices are non-overlapping.

5. The method of claim 3, wherein the first subset of indices comprise even-numbered indices and the second subset of indices comprise odd-numbered indices.

6. The method of claim 1, further comprising receiving a third SIMD instruction specifying a third subset of indices, and looking up, in the crossbar, a second subset of table entries, wherein the first subset of table entries and the second subset of table entries are non-overlapping.

7. The method of claim 6, further comprising receiving a fourth SIMD instruction specifying a fourth subset of indices, and looking up, in the crossbar, the second subset of table entries.

8. The method of claim 7, wherein the third subset of indices and the fourth subset of indices are non-overlapping.

9. The method of claim 7, wherein the third subset of indices comprise even-numbered indices and the fourth subset of indices comprise odd-numbered indices.

10. The method of claim 1, wherein the first subset of the table comprises contiguous table entries.

11. An apparatus comprising:
a memory comprising a table; and
a processor configured to execute a first single instruction multiple data, SIMD, instruction, wherein the processor comprises:
a crossbar configured to lookup a first subset of table entries of the table corresponding to the first subset of indices specified by the first SIMD instruction;
logic to check whether the outputs of the crossbar belong to a desired subset of table entries by comparing one or more most significant bits of each index of the first subset of indices with a sub-table select value; and
logic to generate a first vector output of the first SIMD instruction as equal to the outputs of the crossbar (104), if the outputs of the crossbar (104) belong to a desired subset of table entries; and
logic to generate the first vector output as equal to zero values, if the outputs of the crossbar (104) do not belong to a desired subset of table entries.

12. A computer program product comprising a computer readable medium, the computer readable medium comprising at least one instruction for causing an apparatus according to claim 11 to perform a method in accordance with any of claims 1 to 10.

## Patentansprüche

1. Ein Verfahren zum Nachschlagen von Einträgen einer Tabelle (102), die in einem Speicher (103) gespeichert sind, mittels eines Prozessors (101), wobei das Verfahren Folgendes aufweist:
Empfangen (302) einer ersten Einzelanweisungs- bzw. SIMD-Anweisung für multiple Daten (SIMD = Single Instruction Multiple Data), die eine erste Teilmenge von Indizes bestimmt;
Nachschlagen (304), in einem vom Prozessor (101) implementierten Crossbar (104), einer ersten Teilmenge von Tabelleneinträgen, die der ersten Teilmenge von Indizes entsprechen;
Überprüfen, ob die Ausgaben des Crossbars zu einer erwünschten Teilmenge von Tabelleneinträgen gehören, und zwar mittels Vergleichen eines oder mehrerer der signifikantesten Bits von jedem Index der ersten Teilmenge von Indices mit einem Teiltabellen-Auswahlwert;
Erzeugen einer ersten Vektorausgabe der ersten SIMD-Anweisung als gleichwertig zu den Ausgaben des Crossbars (104), falls die Ausgaben des Crossbars (104) zu einer erwünschten Teilmenge der Tabelleneinträge gehören; und
Erzeugen der ersten Vektorausgabe als gleichwertig zu Nullwerten, falls die Ausgaben des Crossbars (104) nicht zu einer erwünschten Teilmenge von Tabelleneinträgen gehören.

2. Verfahren nach Anspruch 1, wobei die erste Teilmenge von Indizes nicht zusammenhängend ist.

3. Verfahren nach Anspruch 1, das ferner Folgendes aufweist:
Empfangen einer zweiten SIMD-Anweisung, die eine zweite Teilmenge von Indizes bestimmt, und
Nachschlagen, im Crossbar (104), der ersten Teilmenge von Tabelleneinträgen mit der zweiten Teilmenge von Indizes.

4. Verfahren nach Anspruch 3, wobei die erste Teilmenge von Indizes und die zweite Teilmenge von Indizes nicht überlappend sind.

5. Verfahren nach Anspruch 3, wobei die erste Teilmenge von Indizes geradzahlige Indizes und die zweite Teilmenge von Indizes ungeradzahlige Indizes aufweist.

6. Verfahren nach Anspruch 1, das ferner Folgendes aufweist:
Empfangen einer dritten SIMD-Anweisung, die eine dritte Teilmenge von Indizes bestimmt, und
Nachschlagen, im Crossbar, einer zweiten Teilmenge von Tabelleneinträgen, wobei die erste Teilmenge von Tabelleneinträgen und die zweite Teilmenge von Tabelleneinträgen nicht überlappend sind.

7. Verfahren nach Anspruch 6, das ferner Folgendes aufweist:
Empfangen einer vierten SIMD-Anweisung, die eine vierte Teilmenge von Indizes bestimmt, und
Nachschlagen, im Crossbar, der zweiten Teilmenge von Tabelleneinträgen.

8. Verfahren nach Anspruch 7, wobei die dritte Teilmenge von Indizes und die vierte Teilmenge von Indizes nicht überlappend sind.

9. Verfahren nach Anspruch 7, wobei die dritte Teilmenge von Indizes geradzahlige Indizes und die vierte Teilmenge von Indizes ungeradzahlige Indizes aufweist.

10. Verfahren nach Anspruch 1, wobei die erste Teilmenge von Tabelleneinträgen zusammenhängende Tabelleneinträge aufweist.

11. Eine Vorrichtung, die Folgendes aufweist:
einen Speicher, der eine Tabelle aufweist; und
einen Prozessor, der eingerichtet ist, eine ersten SIMD-Anweisung (SIMD = Single Instruction Multiple Data) auszuführen, wobei der Prozessor Folgendes aufweist:
einen Crossbar, der eingerichtet ist, eine erste Teilmenge von Tabelleneinträgen der Tabelle nachzuschlagen, die der ersten Teilmenge von Indizes entspricht, die von der ersten SIMD-Anweisung bestimmt wurden;
Logik, um zu überprüfen, ob die Ausgaben des Crossbars zu einer erwünschten Teilmenge von Tabelleneinträgen gehören, und zwar mittels Vergleichen eines oder mehrerer der signifikantesten Bits von jedem Index der ersten Teilmenge von Indizes mit einem Teiltabellen-Auswahlswert; und
Logik, um eine erste Vektorausgabe der SIMD-Anweisung als gleichwertig zu den Ausgaben des Crossbars (104) zu erzeugen, falls die Ausgaben des Crossbars (104) zu einer erwünschten Teilmenge der Tabelleneinträge gehören; und
Logik, um die erste Vektorausgabe als gleichwertig zu Nullwerten zu erzeugen, falls die Ausgaben des Corssbars (104) nicht zu einer erwünschten Teilmenge von Tabelleneinträgen gehören.

12. Ein Computerprogrammprodukt, das ein computerlesbares Medium aufweist, wobei das computerlesbare Medium mindestens eine Anweisung aufweist, die eine Vorrichtung gemäß Anspruch 11 dazu veranlasst, ein Verfahren nach einem der Ansprüche 1 bis 10 auszuführen.

## Revendications

1. Un procédé de recherche d'entrées d'une table (102) stockée dans une mémoire (103) par un processeur (101), le procédé comprenant les étapes consistant à :
recevoir (302) une première instruction SIMD, à instruction unique et à données multiples, spécifiant une première sous-ensemble d'indices ;
rechercher (304), dans un réseau d'interconnexion (104) mis en œuvre par le processeur (101), un premier sous-ensemble d'entrées de table correspondant au premier sous-ensemble d'indices ;
vérifier si les sorties du réseau d'interconnexion appartiennent à un sous-ensemble souhaité d'entrées de table en comparant un ou plusieurs bits de poids fort de chaque index du premier sous-ensemble d'indices avec une valeur de sélection de sous-table ;
générer une première sortie vectorielle de la première instruction SIMD égale aux sorties du réseau d'interconnexion (104), si les sorties du réseau d'interconnexion (104) appartiennent à un sous-ensemble souhaité parmi les entrées de table ; et
générer la première sortie de vecteur comme étant égale à zéro, si les sorties du réseau d'interconnexion (104) n'appartiennent pas à un sous-ensemble souhaité parmi les entrées de table.

2. Procédé selon la revendication 1, dans lequel le premier sous-ensemble d'indices est non contigu.

3. Procédé selon la revendication 1, comprenant en outre la réception d'une seconde instruction SIMD spécifiant un second sous-ensemble d'indices et l'étape consistant à rechercher, dans le réseau d'interconnexion (104), le premier sous-ensemble d'entrées de table avec le second sous-ensemble d'indices.

4. Procédé selon la revendication 3, dans lequel le premier sous-ensemble d'indices et le deuxième sous-ensemble d'indices ne se chevauchent pas.

5. Procédé selon la revendication 3, dans lequel le premier sous-ensemble d'indices comprend des indices à numéros pairs et le second sous-ensemble d'indices comprend des indices à numéros impairs.

6. Procédé selon la revendication 1, comprenant en outre la réception d'une troisième instruction SIMD spécifiant un troisième sous-ensemble d'indices et l'étape consistant à rechercher, dans le réseau d'interconnexion, un deuxième sous-ensemble d'entrées de table, le premier sous-ensemble d'entrées de table et le deuxième sous-ensemble des entrées de table ne se chevauchant pas.

7. Procédé selon la revendication 6, comprenant en outre la réception d'une quatrième instruction SIMD spécifiant un quatrième sous-ensemble d'indices et l'étape consistant à rechercher, dans le réseau d'interconnexion, le deuxième sous-ensemble d'entrées de table.

8. Procédé selon la revendication 7, dans lequel le troisième sous-ensemble d'indices et le quatrième sous-ensemble d'indices ne se chevauchent pas.

9. Procédé selon la revendication 7, dans lequel le troisième sous-ensemble d'indices comprend des indices à numéros pairs et le quatrième sous-ensemble d'indices comprend des indices à numéros impairs.

10. Procédé selon la revendication 1, dans lequel le premier sous-ensemble de la table comprend des entrées de table contiguës.

11. Appareil comprenant :
une mémoire comprenant une table ; et
un processeur configuré pour exécuter une première instruction SIMD, à instruction unique et à données multiples, dans lequel le processeur comprend :
un réseau d'interconnexion configuré pour rechercher un premier sous-ensemble d'entrées de table de la table correspondant au premier sous-ensemble d'indices spécifié par la première instruction SIMD ;
une logique pour vérifier si les sorties du réseau d'interconnexion appartiennent à un sous-ensemble souhaité d'entrées de table en comparant un ou plusieurs bits de poids fort de chaque index du premier sous-ensemble d'indices avec une valeur de sélection de sous-table ; et
une logique pour générer une première sortie vectorielle de la première instruction SIMD égale aux sorties du réseau d'interconnexion (104), si les sorties du réseau d'interconnexion (104) appartiennent à un sous-ensemble souhaité parmi les entrées de table ; et
une logique pour générer la première sortie de vecteur comme étant égale à zéro, si les sorties du réseau d'interconnexion (104) n'appartiennent pas à un sous-ensemble souhaité parmi les entrées de table.

12. Produit formant programme d'ordinateur comprenant un support lisible par ordinateur, le support lisible par ordinateur comprenant au moins une instruction pour amener un appareil selon la revendication 11 à mettre en œuvre un procédé selon l'une quelconque des revendications 1 à 10.
